# EUROPEAN PATENT APPLICATION

(11) **EP 3 929 062 A1**
(43) Date of publication of application: **29.12.2021**
(21) Application number: 19806083.2
(22) Date of filing: 19.02.2019
(51) Int. Cl.: B62D 6/00

(54) **GENERAL-PURPOSE ROTARY ENCODER AND SERVO MOTOR USING SAME**

(71) Applicant: Igarashi Electric Works Ltd., Kawasaki-shi, Kanagawa 212-0006 (JP)
(72) Inventor: TADA Junichi, Kawasaki-shi, Kanagawa 212-0006 (JP)
(74) Representative: Hirsch & Associés
(86) International application number: PCT/JP2019/006172
(87) International publication number: WO 2020/170343

(57) **Abstract**

Uses a generic sensor to provide a rotary encoder with high accuracy, excellent environmental resistance, and low cost that is equivalent to having a precision sensor. A generic type rotary encoder comprising a generic sensor, a rotation angle detector that outputs information on the rotation angle of the rotary shaft of the motor based on an output signal from the generic sensor, and an encoder control unit, wherein the encoder control unit comprises a function for driving an initial setting motor, an initial setting data acquisition function for acquiring initial setting data unique to the generic sensor, a normal operation data acquisition function that acquires and generates data for normal operation used when the motor to be controlled to which the generic type rotary encoder is mounted is normally operated, and an EEPROM recorded calibration data to calibrate the initial setting data unique to the generic sensor, wherein the calibration data is obtained, by using a standard sensor that guarantees high accuracy of 2 digits or 3 digits higher than the generic sensor, and by simultaneously connecting the generic sensor and the standard sensor to the initial setting motor and driving the initial setting motor at least one forward and reverse rotation, and the calibration data is data for calibration relating to the rotation angle of the rotary shaft.

## Description

### TECHNICAL FIELD OF THE INVENTION

The present invention relates to a generic type rotary encoder adopted a generic sensor and a servo motor using the encoder.

### BACKGROUND OF THE INVENTION

As an encoder for an electrical equipment, a rotary encoder is used to measure the absolute angular position of a rotary shaft driven by a motor. For example, as a control method of a brushless DC motor, a rotary encoder that detects each phase of Z phase, U phase, V phase and W phase of the motor, are synchronized with magnetic pole positions of a rotor of the motor, and the motor is controlled as a fully closed loop servo motor.

In patent document 1, a motor control device comprising a set of MR sensor unit for detecting the rotational phase of a rotary shaft of the motor is disclosed, wherein address of an EEPROM are given to each information of a driving signal of A phase, B phase, Z phase signal, U phase, V phase, W phase, and absolute origin position of the motor and recorded in the EEPROM as a multi-rotation absolute signal data. The MR sensor unit also includes a shaft deviation corrector.

In patent document 2, an optical rotary encoder is disclosed wherein a suppression unit that suppresses of the light via a pattern formed on a scale, the light serving as stray light to be incident upon a light reception element to be arranged at a position deviated in a first direction relative to the prescribed light reception element from being emitted from a diaphragm.

In patent document 3, an absolute encoder is disclosed which is equipped magnetic sensors for detecting a magnetic field of a magnetic scale, a photo sensor for detecting reflected light from a position detection scale, and a data control part for determining the relative position of the magnetic sensors to the magnetic scale based on a detection result from the magnetic sensors and the absolute position of a position detection object based on a detection result from the photo sensor. The absolute encoder calibrates automatically data showing the relationship between the position detection object and the absolute position in the data control part based on the detection results from the photo sensor and the magnetic sensors.

### PRIOR ART DOCUMENTS

### PATENT DOCUMENTS

Patent document 1: JP 6339307 B1
Patent document 2: JP 2015-225007 A
Patent document 3: JP 2005-172696 A

### SUMMARY OF THE INVENTION

### [PROBLEM TO BE SOLVED BY THE INVENTION]

In order to control the motor driving each driven member by a rotary encoder in a closed loop, accurate information, such as rotation speed, number of rotations, and rotation direction of the motor, is required. Therefore, various techniques have been proposed in order to further improve the detection accuracy in the detection of the rotation angle using the rotary encoder.

According to the invention described in patent document 1, information on the magnetic sensor origin position of the MR sensor with respect to the rotary shaft is obtained and Z-phase signal is set based on the absolute origin position, then, EEPROM address are assigned to the information, and the multi-rotation/absolute signal data is generated. Thereby, a function as a rotary encoder is given. According to this invention, since a MR sensor is adopted, a cheap and comparatively highly precise rotary encoder can be offered. As an example, an encoder using a generic type GMR mass-produced has a price as cheap as less than thousands of yen per set.

In the present invention, such a generic type sensor that is inexpensive and has a predetermined accuracy is defined as a generic sensor.

Originally this kind of generic sensor is manufactured considering supplying in large quantities and cheaply as a premise as parts for cars, etc. Therefore, there are inherent variations and distortions in the output characteristics of generic sensors. Namely, due to misalignment of the magnet itself, variation in sensitivity of a magneto resistive element sensor, deviation of phase angle caused by error when fixing the magneto resistive element sensor to the motor, etc., each generic sensor has a problem that its output characteristics have variations and distortions peculiar to each sensor. Therefore, when a generic sensor is used as a rotary encoder sensor, a function such as an axis deviation correction process is provided in order to correct variations and distortion inherent to the sensor and to ensure a predetermined accuracy. However, it is difficult to accurately correct variations and distortions at intermediate angles. Therefore, a generic sensor can only obtain a scale accuracy of ± 1 degree to several degrees in rotation angle (mechanical angle). Such a rotary encoder cannot be used in a device that requires an accuracy of the order of µm, for example, a chip mounter.

Moreover, also about a resolver used as a sensor of a rotary encoder, although it is comparatively cheap, each sensor has peculiar variation and distortion. The resolver has a large variation in output characteristics, and only a scale accuracy of about ± 10 degrees is obtained.

As mentioned above, using a generic sensor, it is difficult to realize an inexpensive and consistent high-accuracy rotary encoder that has enough absolute accuracy to accurately determine the rotation speed and rotation direction.

On the other hand, many of optical rotary encoders, as described in patent document 2, a glass substrate is provided in order to ensure high accuracy. Therefore, for example, there are some high-resolution modes with resolution exceeding 10,000 pulses having a guaranteed accuracy of ± 2 seconds. Moreover, even in a high-resolution model with a resolution (signal period/rotation) of 4096, the graduation accuracy is guaranteed ± 10 seconds. However, such a high precision optical rotary encoder has a price as high as several hundreds of thousands or millions of yen, and the target of devices that can be mounted is limited to expensive devices.

In the present invention, a sensor having an absolute accuracy of 2 to 3 digits higher than that of a generic sensor and inferior in environmental resistance and having a high price is defined as a high precision sensor.

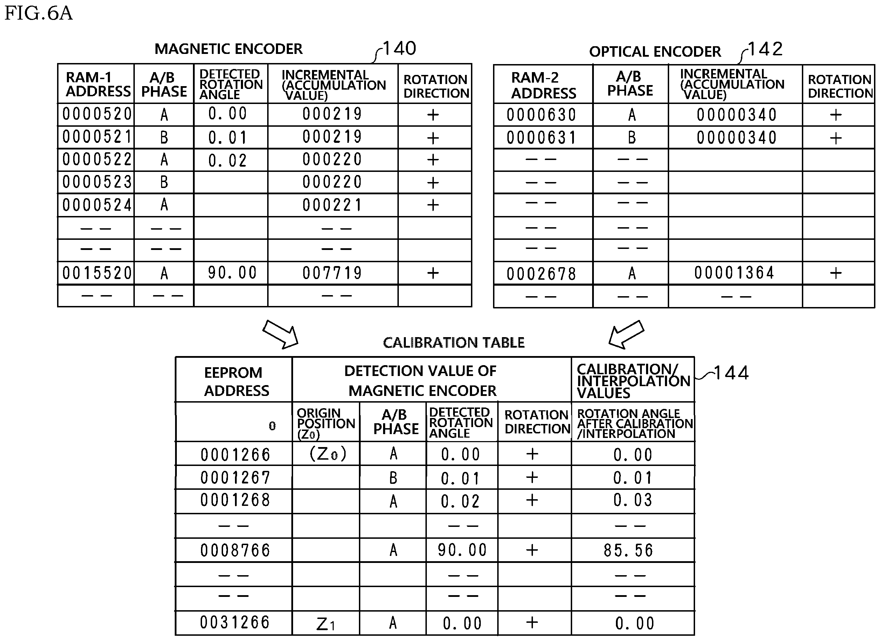

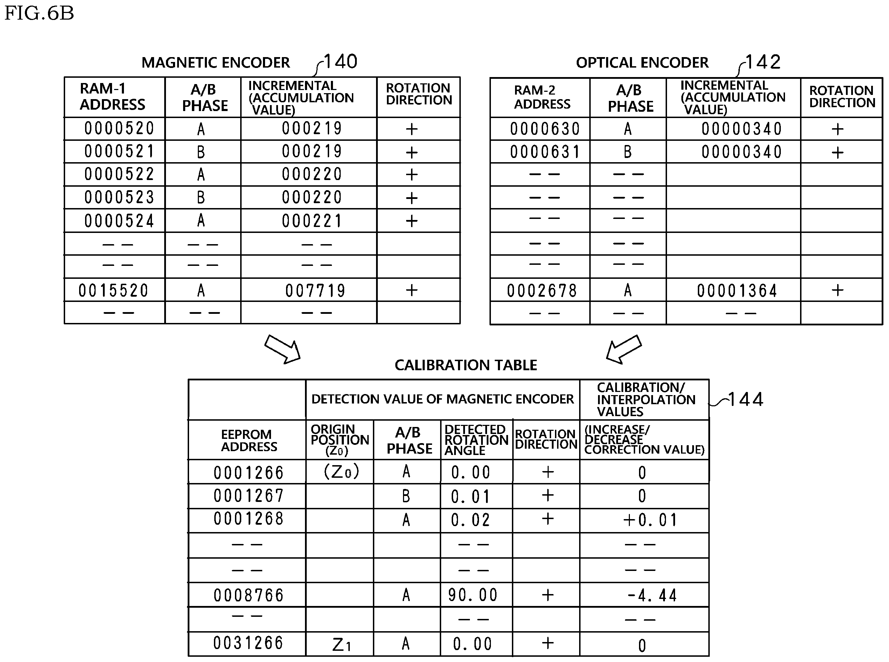

The absolute encoder disclosed in patent document 3 determines whether to calibrate the output from the photo sensor at the time of starting (S101 in FIG. 6). When calibrating, the output from a magnetic sensor is used to create a calibration table, and the output from the photo sensor is calibrated (S102-109 in FIG. 6). However, the output from the generic sensor has the problem described above. For that reason, it is difficult to realize an absolute encoder capable of correcting the output from the photo sensor with high accuracy by the output of the magnetic sensor.

It is an object of the present invention to provide a rotary encoder that uses a generic sensor and has high accuracy comparable to that provided with a high precision sensor, excellent in environmental resistance, and inexpensive.

Other object of the present invention is to provide a servo motor with high accuracy comparable to that provided with a high precision sensor, with excellent environmental resistance and inexpensive.

### [MEANS FOR SOLVING PROBLEM]

According to one aspect of the present invention, a generic type rotary encoder comprising a generic sensor mounted on a motor and detects rotation angle of a rotary shaft of the motor; a rotation angle detector that outputs information on the rotation angle of the rotary shaft of the motor based on an output signal from the generic sensor; and an encoder control unit that generates and outputs a multi-rotation absolute signal for driving the motor based on the information of the rotation angle,
wherein the encoder control unit comprises a function for driving an initial setting motor, an initial setting data acquisition unit for acquiring initial setting data unique to the generic sensor, a normal operation data acquisition unit that acquires and generates data for normal operation used when the motor to be controlled to which the generic type rotary encoder is mounted is normally operated, and an EEPROM recorded calibration data to calibrate the initial setting data unique to the generic sensor,
wherein, the calibration data is obtained, by using a standard sensor that guarantees high accuracy of 2 digits or 3 digits higher than the generic sensor, and by simultaneously connecting the generic sensor and the standard sensor to the initial setting motor and driving the initial setting motor at least one forward and reverse rotation, and
wherein, the calibration data is data for calibration relating to the rotation angle of the rotary shaft.

Thereby, by using a generic sensor, it is possible to provide a rotary encoder with high accuracy comparable to that provided with a high precision sensor, excellent in environmental resistance, and inexpensive.

According to another aspect of the present invention, in the generic type rotary encoder, the encoder control unit calibrates the data of each position of the A/B phase digital signals of at least one forward and reverse rotation of the rotary shaft obtained from the generic sensor with the calibration data, based on the incremental values based on the information Z₀ and Zₙ representing the number of rotations of the rotary shaft, and the calibrated data is recorded in the EEPROM as multi-rotation absolute data for controlling the motor to be controlled.

Accordingly, it is possible to provide a rotary encoder that is suitable for controlling a motor with high accuracy while using a generic sensor, has excellent environmental resistance, and is inexpensive.

According to another aspect of the present invention, the generic sensor comprises a plate-like magnet that is rotatably held in a state of being connected to one end of the rotary shaft, and has an N-pole region and an S-pole region, and a pair of MR sensors that can be fixed to the housing side of the motor at a position facing the magnet, wherein a magnet holder for holding the magnet has a hollow portion into which the rotary shaft of the initial setting motor can be inserted.

Accordingly, the generic type rotary encoder can be easily and accurately mounted on the initial setting device and the motor to be mounted thereafter.

According to another aspect of the present invention, in the generic type rotary encoder, the magnet holder is rotatably held in a cylindrical box through a bearing, wherein the magnet holder has a holding unit for fixing the cylindrical box to the housing of the initial setting motor, and an encoder board on which the rotation angle detector and the encoder control unit are mounted.

Accordingly, the generic type rotary encoder can be easily and accurately mounted on the initial setting device and the motor to be mounted thereafter.

According to other aspect of the present invention, in the generic type rotary encoder, the encoder control unit includes an SSC-BUS converter and an SPI-BUS converter and is configured to be compatible with a serial bus type EEPROM and a parallel EEPROM.

Accordingly, a generic type rotary encoder can be used for both serial bus type EEPROM and parallel EEPROM type.

According to the other aspect of the present invention, a servo motor including a generic type rotary encoder and a controller, wherein the generic type rotary encoder includes each of the above aspects of the present invention.

Accordingly, by using a generic sensor, it is possible to provide a servo motor that is suitable for controlling a motor to be controlled, is highly accurate, has excellent environmental resistance, and is inexpensive.

### BRIEF DESCRIPTION OF THE DRAWINGS

FIG. 1 is a diagram showing a system configuration example of an initial setting device for a generic type rotary encoder according to the first embodiment of the present invention.
FIG. 2A is a functional block diagram showing a structural example of a generic type rotary encoder based on the first embodiment.
FIG. 2B is a longitudinal cross-sectional view showing a specific embodiment of the generic type rotary encoder in the embodiment of FIG. 1.
FIG. 2C is a longitudinal cross-sectional view showing other specific example of the generic type rotary encoder, in the first embodiment.
FIG. 3A is an A-A sectional view of FIG. 1 showing the example of composition of the principal part of a brushless DC motor for the initial setting device.
FIG. 3B is a block diagram showing an example of a drive circuit of the brushless DC motor, in the first embodiment.
FIG. 4Aand FIG. 4B are a time chart showing an outline of initialization processing, in the first embodiment.
FIG. 5A is a diagram showing an example of characteristics acquired with the generic type rotary encoder, in the first embodiment.
FIG. 5B is a diagram showing an example of the calibrating method of the characteristics of the generic type rotary encoder, in the first embodiment.
FIG. 6A is a diagram showing an example of a table of the generic type rotary encoder, a table of an optical rotary encoder, and a table for calibration, in the first embodiment.
FIG. 6B is a diagram showing another example of a table of the generic type rotary encoder, a table of the optical rotary encoder, and a table for calibrating, in the first embodiment.
FIG. 7 is a flow chart showing a processing at the time of normal operation of a brushless DC motor using a calibrated generic type rotary encoder, in the first embodiment.
FIG. 8 is a diagram for explaining the relation of the signals of Z phase, A phase, B phase, U phase, V phase and W phase at the time of the multi rotations, in the first embodiment.
FIG. 9 is a diagram showing an example of calibrated characteristics of the generic type rotary encoder at the time of multi-rotation, in the first embodiment
FIG. 10 is a diagram showing effect of calibrating processing at the time in normal operation mode using a generic type rotary encoder, according to the first embodiment.
FIG. 11A and FIG. 11B are a flow chart showing an initialization processing of the generic type rotary encoder according to the third embodiment of the present invention.

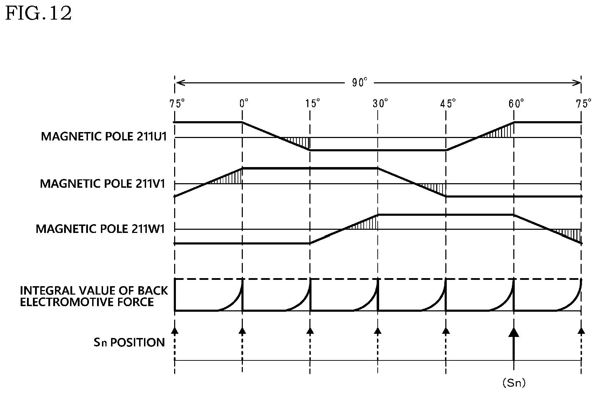

FIG. 12 is a diagram showing the relationship between an integration value peak of the back electromotive force of each phase of the brushless DC motor and the positioning information (Sn) in the initialization processing in FIG. 11Aand FIG. 11B.
FIG. 13 is a perspective view of a robot equipped with a generic type rotary encoder, according to forth embodiment of the present invention.
FIG. 14 is a diagram showing an outline of an electric power steering of a car which is equipped with a generic type rotary encoder, according to forth embodiment of the present invention.

### DESCRIPTION OF THE EMBODIMENTS

Hereinafter, the embodiments will now be described with reference to the accompanying drawings.

### Embodiment 1

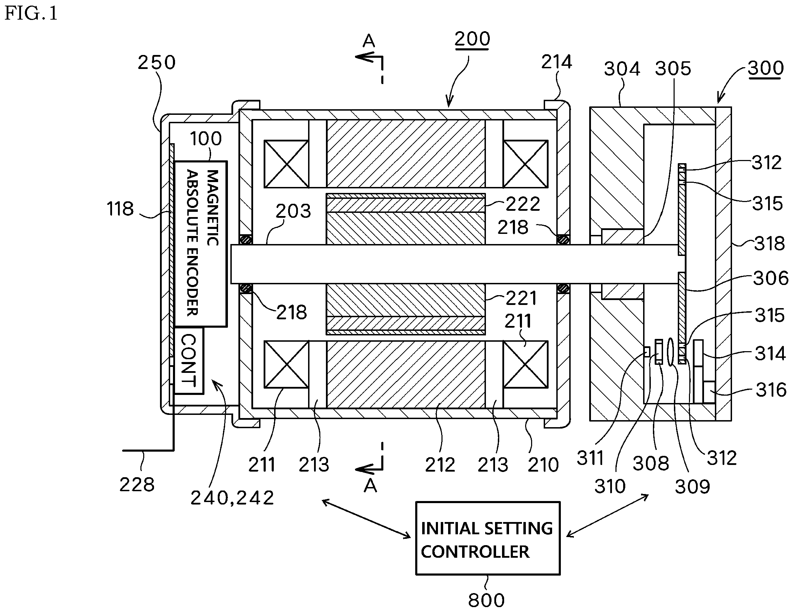

FIG. 1 is a diagram showing an example of a system configuration of an initial setting device for a generic type rotary encoder according to the first embodiment of the present invention.

This initial setting device is configured as a system including an initial setting brushless DC motor 200, an initial setting optical rotary encoder 300 with high absolute accuracy and fixed to one end of a rotary shaft of the DC motor 200, and an initial setting controller 800. In this initial setting device, a generic type rotary encoder 100 that is a target of initial setting is installed. In the example of FIG. 1, the generic type rotary encoder is installed between the other end of the rotary shaft 203 of the brushless DC motor 200 and a substrate 118 fixed to a housing cover 250, and calibration data associated with the initial setting is recorded in a memory of the encoder. Using this initial setting device, initial setting processing is sequentially performed on a large numbers of generic type rotary encoders 100.

Various kinds of information required for the initial setting of the generic type rotary encoder 100 is acquired from the initial setting controller 800. Data on the rotation state of the initial setting brushless DC motor 200 is simultaneously acquired by the generic type rotary encoder 100 and the optical rotary encoder 300. In other words, two sets of data related to the rotation of the same rotary shaft 203 are acquired synchronously, and those data are recorded in the generic type rotary encoder 100 and are recorded in the initial setting controller 800.

The generic type rotary encoder 100 includes a generic sensor, for example, a magnetic sensor, which has a predetermined absolute accuracy but does not have strictly high accuracy, while has excellent environmental resistance and is inexpensive. As a magneto resistive element sensor, for example, a MR sensor such as GMR, TMR, or AMR can be used, for example. As the generic sensor, a capacitive sensor or an optical sensor may be used. Any type of the generic sensor that does not satisfy the predetermined absolute accuracy, for example, a sensor with absolute accuracy at 360 degrees per rotation is ± 3 degrees or worse is excluded. Moreover, those that are inferior in environmental resistance or expensive are excluded.

On the other hand, the optical rotary encoder 300 of the initial setting device includes a standard sensor dedicated to the initial setting having an absolute accuracy that is two to three digits higher than that of the generic sensor, such as an optical sensor. This standard sensor is inferior in environmental resistance and is expensive.

The highly precise optical sensor in the present invention has high absolute accuracy, for example, the absolute accuracy for ±10 seconds or less. A laser type sensor which fulfills such requirements shall also be contained in the highly precise optical sensor in the present invention.

In the following, as the motor 200 dedicated to the initial setting, a brushless DC motor will be described as an example. The brushless DC motor 200 is, as a stator fixed to the inside of a motor housing 210, equipped with a field core 212 and a field coil 211 wound around an insulating member 213. The magnet formed integrally with the rotary shaft constitutes an 8-pole rotor having a rotor yoke 221 and eight permanent magnets 222 fixed to the outer periphery thereof. The rotary shaft 203 is held by bearings 218 provided in the motor housing 210 and an end cover 214. The substrate 118 is equipped also with a motor controller 240, a motor driver 242 etc., and a signal line 228 and a power source line (Not shown) are connected to them.

Note that the motor dedicated to the initial setting is not limited to the brushless DC motor. It is required to have a function of rotating stably at a constant speed in response to the command value. On the other hand, a motor to be controlled by the generic type rotary encoder of the present invention is not limited to the brushless DC motor, either. Namely, the motor dedicated to the initial setting may be a type of motor different from the control target of the generic type rotary encoder 100, for example, a direct current motor with a brush, or a synchronous motor of alternating current.

In the embodiment, hereinafter, description will be made on the assumption that the motor to which the encoder 100 for which the initialization has been completed is attached, that is, the motor to be controlled by the encoder is a brushless DC motor, so that the generic type rotary encoder also has a function of generating multi-rotation absolute data (Z, U, V, W) for controlling the brushless DC motor.

The optical rotary encoder 300 which forms part of the initial setting device is directly connected with the rotary shaft 203 of the brushless DC motor 200 that also forms part of the initial setting device. That is, a rotary shaft of the optical rotary encoder 300 is common to the rotary shaft 203 of the motor, this rotary shaft is held in the casing 304 via the bearing 305, and a rotating substrate 306 is fixed to one end of the rotary shaft. Note that if it satisfies the conditions to ensure high accuracy, the rotary shaft of the optical rotary encoder 300 may be connected to the rotary shaft 203 of the brushless DC motor 200 via a clutch.

The rotating substrate 306 is made of a rigid material such as glass, metal, or ceramic, etc., that is not easily deformed by rotation, impact, vibration, etc. A light emitting element 311, an aperture 310 of a diaphragm 308, a lens 309, a light receiving element 314 and a controller 316, etc. are provided in the casing at positions facing each other with the rotating substrate 306 interposed there between. A plurality of types of patterns such as a first slit pattern 312 and a second slit pattern 315 are formed on the rotating substrate 306 in the circumferential direction.

As the rotating substrate 306 rotates, the slit patterns 312 and 315 pass between the light emitting element 311 and the light receiving element 314, so that the state in which light from light emitting elements is transmitted through the slit patterns and the state in which the light is blocked are alternately repeated, and the output of the light receiving element 314 is counted by the controller 316. The diaphragm 308 is provided in order to restrict the area of incident light so that unnecessary light does not enter the light receiving element 314. The details of the configuration and operation of the optical rotary encoder are replaced with the citation described in patent document 2. The optical rotary encoder that forms part of the initial setting device only needs to function as a high precision optical sensor, and not to just be limited to the example of patent document 2.

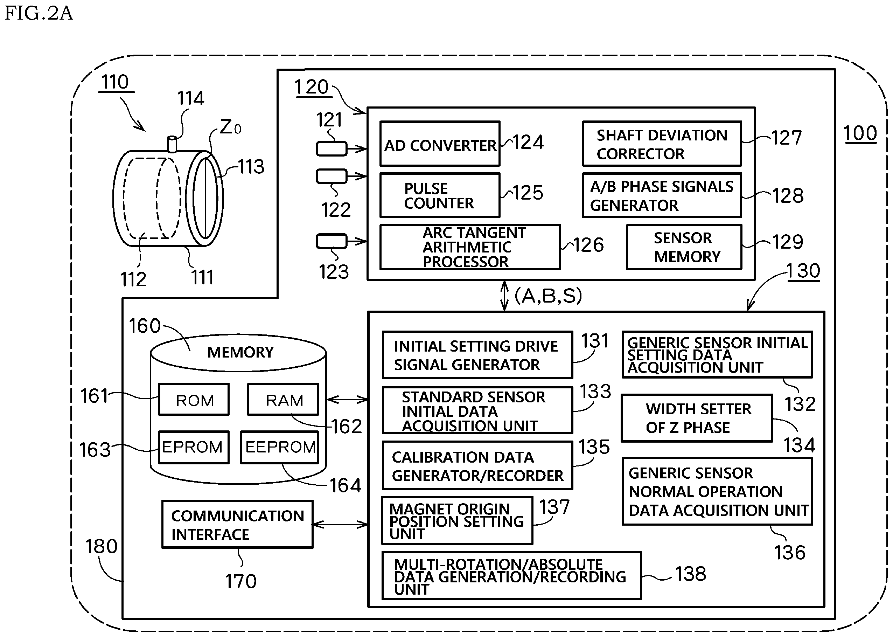

Next, FIG. 2A is a functional block diagram showing the example of composition of a generic type rotary encoder based on the first embodiment.

The generic type rotary encoder 100 includes a magnet unit 110, a sensor output processing unit 120, an encoder control unit 130, an encoder memory 160, and a communication interface 170. The generic type rotary encoder of the present invention functions as a rotary encoder of the brushless DC motor 200 at the time of the initial setting which used the initial setting processing unit. After the initial setting, the generic type rotary encoder becomes a rotary encoder that can be mounted on any motor or any rotating member of various devices to be controlled. The magnet unit 110 of the generic type rotary encoder 100 is held on the rotary shaft of the motor, and other components except the magnet unit 110 are fixed to a fixed side of the motor, for example, to the motor housing.

The magnet unit 110 that forms a part of the generic sensor comprises a cylindrical magnet holder 111 made of non-magnetic material such as resin, a hollow part 112 of the holder for inserting a rotating body such as the rotary shaft of the motor into it, a flat shaped magnet 113 fixed to an end face of the magnet holder, and a fixing means 114 for fixing the magnet holder to the rotating body. One of the boundaries between the N pole and S pole of the magnet 113, for example, the upper end of the magnet in FIG. 1, is the origin position Z₀ of the rotary shaft.

The sensor output processing unit 120 constitutes the remaining portion of the generic sensor. The sensor output processing unit is equipped with a pair of MR sensors (magnetic-resistance-element sensors) 121,122, a temperature sensor 123, and a sensor output processing circuit. The sensor output processing unit is separated in the position opposed to the magnet 113 and fixed on the fixed side of the motor. When the magnet 113 rotates by the angle θ (mechanical angle) and the direction of the magnetic field acting on each MR sensor rotates, the electric resistance value of the MR sensor, in other words, the voltage of the output signal of the MR sensor fluctuates correspondingly, and a pulse signal corresponding to one cycle is output for each of the SIN wave and the COS wave at every rotation 360° (mechanical angle) of the rotary shaft 13.

The magnet 113 comprises a substrate made of a thin film of Si or a glass, and an alloy mainly composed of a ferromagnetic metal such as Ni, Fe etc. formed on the substrate.

The sensor output processing circuit of the sensor output processing unit 120 has an A/D converter 124, a pulse counter 125, an arc tangent arithmetic processor 126, a shaft deviation corrector 127, an A/B phase signals generator 128, and sensor memories 129 such as RAM. The sensor output processing circuit unit is realized by running a program on a microcomputer with a memory, for example. This sensor output processing circuit is realized by running a program on a microcomputer with a memory, for example.

In the sensor output processing circuit unit, analog signal of one pair of MR sensors are quantized, and those signal are divided into multiple parts by an electrical angle interpolation processing, and converted into A phase and B phase digital signals, for example, 30000 pulses per one rotation of the rotary shaft, respectively. Since A/B phase signals which are acquired from the one pair of MR sensors 121, 122 may contain errors (mainly shaft deviation error) due to production error, installation error, temperature influence etc. of each sensor, so that a compensation processing is made in the shaft deviation corrector 127 etc.

Accumulation of those A/B phase digital signals is carried out with the pulse counter 125, and that value are subjected to an arc tangent processing in the arc tangent arithmetic processor 126. The value of the arc tangent calculation becomes a right triangle shape in which the cumulative added value repeats increasing and decreasing linearly in synchronization with the position of the angle 0 for each rotation of the rotary shaft 13.

In the A/B phase signals generator 128, based on these cumulative addition values, data of pulse of incremental A phase signal and B phase signals (hereinafter referred to as A/B phase signals) are generated, and held in the sensor memory 129. Moreover, in the A/B phase signals generator 128, the signal of the origin position Z₀ and multi-rotation position (S) is generated and outputted synchronizing with the position of the angle 0 which appears for every rotation of the rotary shaft 13. The signal of these multi-rotation position (S) is used for generation of the information Zn (Z1, Z2, -, Zn) showing the number of rotations of the rotary shaft 13.

For initial setting of the generic type rotary encoder 100, the encoder control unit 130 drives the brushless DC initial setting motor, and acquires necessary information, and records it in the encoder memory 160. As a result, the generic type rotary encoder 100 is provided with a function as a highly accurate rotary encoder comparable to an optical rotary encoder.

The encoder control units 130 has functions of; an initial setting drive signal generator 131, a generic sensor initial setting data acquisition unit 132, a standard sensor initial data acquisition unit 133, a width setter of Z phase 134, a calibration data generator/recorder 135, a generic sensor normal operation data acquisition unit 136, a magnet origin position setting unit 137, and a multi-rotation/absolute data generation/recording unit 138.

The initial setting drive signal generator 131 generates and outputs the driving signal (iu, iv, iw) for driving the initial setting brushless DC motor to forward rotation direction and reverse rotation direction. The generic sensor initial setting data acquisition unit 132 acquires the data of A/B phase signal peculiar to a generic sensor at the time of initial setting, by driving the brushless DC motor with the drive signal (iu, iv, iw) at a predetermined constant low speed, for example, in the range of 5 to 20 rpm, preferably about 10 rpm.

The standard sensor initial data acquisition unit 133 acquires data of the A/B phase signal of the standard sensor, at the time of the initial setting of the standard sensor with the generic type rotary encoder 100 is mounted on the brushless DC motor, and the motor is driven by the drive signal at a constant speed, for example, 10 rpm. The width setter of Z phase 134 generates the signal of the width of Z phase based on A/B phase signal. The calibration data generator/recorder 135 has a function of generating calibration data for calibrating the initial setting data of the generic sensor with the standard sensor initial setting data, acquired under the same conditions. Generation of the data for calibrating is explained later.

The generic sensor normal operation data acquisition unit 136 acquires or generates normal operation data that is used when a brushless DC motor to be controlled is normally operated, equipped with the generic sensor. Namely, for normal operation, data of A/B phase signals, origin position Z₀ and a multi-rotation position (S) is acquired or generated.

The magnet origin position setting unit 137 has a function of determining a fixed position of the magnet by extracting the origin position Z₀, when mounting a generic sensor on a brushless DC motor to be controlled but the origin position of the rotary shaft is unknown. On the other hand, it is not used when the origin position Z₀ of the rotary shaft is known beforehand.

The multi-rotation/absolute data generation/recording unit 138 calibrates the A/B phase signals and multi-rotation position (S) data acquired by the generic sensor with calibration data, and generates multi-rotation/absolute data including the data of the origin position Z₀ and this data is recorded in the EEPROM of the encoder memory 160. This multi-rotation/absolute data is used as an output of the generic type rotary encoder 100 for controlling the brushless DC motor to be controlled.

The encoder memory 160 includes a ROM 161, a RAM 162, an EPROM 163, and an EEPROM 164, which are connected to the encoder control unit via a bus and a memory controller. In the EPROM and the EEPROM, the multi-rotation/absolute signal calibrated with the calibration data related to the operation of the brushless DC motor is sequentially held.

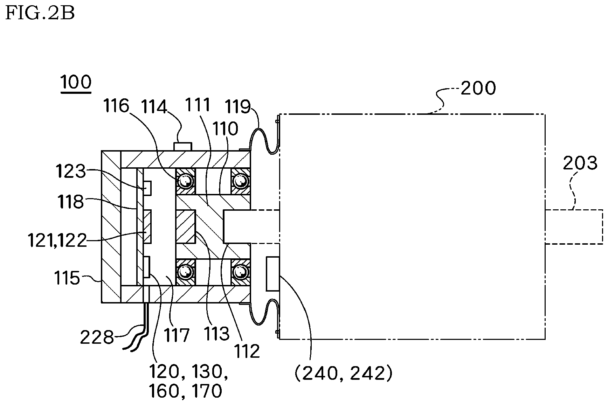

In FIG. 2B, an example of a specific example of the generic type rotary encoder 100 of the first embodiment is shown. The magnet holder 111 that holds the magnet unit 110 is rotatably held by a cylindrical box 115 via a bearing 116. A flat plate magnet 113 is fixed to the magnet holder 111. In the cylindrical box 115, the pair of MR sensors 121,122, the temperature sensor 123, the sensor output processing unit 120, the encoder control unit 130, the encoder memory 160, and the communication interface 170 are mounted on a substrate 118 provided in a space 117. The encoder memory 160 holds a multi-rotation/absolute signal that has been calibrated with calibration data. In order that one pair of MR sensors 121,122 can secure a predetermined magnetic sensitivity, it is set between the surface of the magnet 113 and the pair of MR sensors 121,122 to the predetermined minute space, for example, a gap of 20 mm to 30 mm.

The box 115 has a spring-like holding part 119 at its outer peripheral end. Accordingly, the box is configured to be fixed to the motor housing or the like of the brushless DC motor 200 in a state in which a rotating body such as the rotary shaft 203 of the motor 200 is inserted into the hollow portion 112.

According to this configuration example, the positional relationship between the magnet 113 and the pair of MR sensors 121, 122 is set to an appropriate value in advance. Therefore, by simply fixing the box 115 to the motor housing or the like, the generic type rotary encoder can be easily and accurately attached to the motor for the initial setting device or a motor to be controlled.

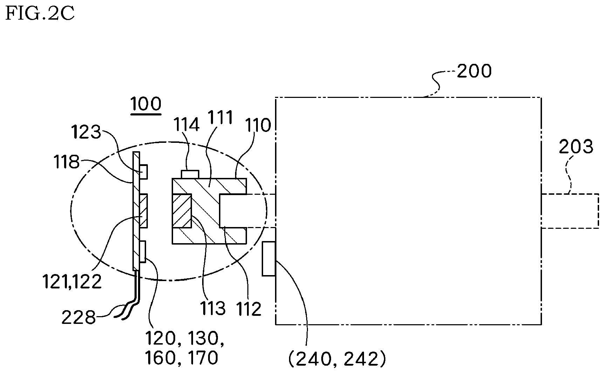

FIG. 2C is a longitudinal cross-sectional view showing other specific example of the generic type rotary encoder 100 according to the first embodiment. Unlike the example of FIG. 2B, the cylindrical box is omitted in this embodiment. The magnet holder 111 holding the magnet unit 110 is fixed to the rotary shaft 203 of the motor 200. The substrate 118, on which the pair of MR sensors 121, 122, the temperature sensor 123, the sensor output processing unit 120, the encoder control unit 130, the encoder memory 160, and the communication interface 170 are mounted, is fixed to the housing cover 250, for example, as shown in FIG. 1. Thereby, a DC servo motor is completed.

In this example, an operation of positioning the MR sensors 121, 122 with respect to the magnet 113 is required as compared with the example of FIG. 2B. On the other hand, the motor controller 240 and the motor driver 242 are collectively installed on the substrate 118, and the degree of freedom in designing the entire brushless DC motor 200 is increased.

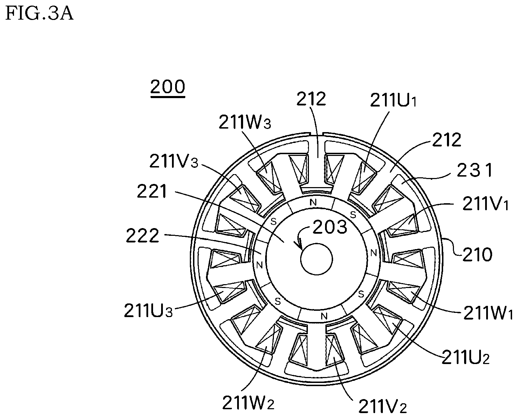

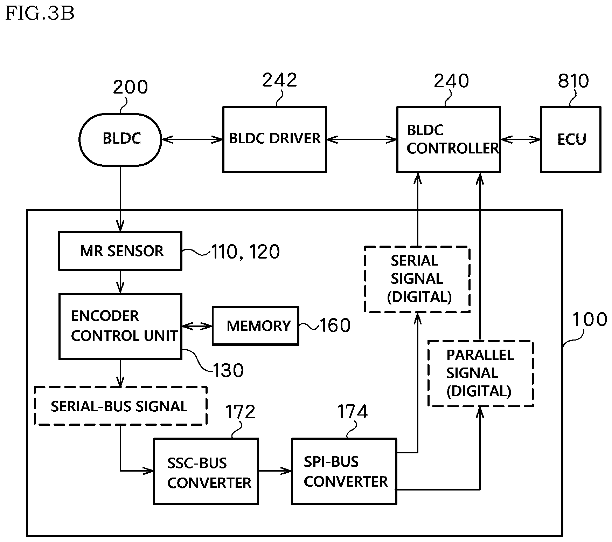

Next, FIG. 3A is an A-A sectional view of FIG. 1 showing the example of composition of the principal part of a brushless DC motor for the initial setting device in the first embodiment. FIG. 3B is a diagram showing a drive circuit of the brushless DC motor for the initial setting device. In addition, FIG. 3A and FIG. 3B are also diagrams illustrating a configuration example of a brushless DC motor when a generic type rotary encoder that has been initially set is mounted on the brushless DC motor.

The brushless DC motor 200 includes a rotor including a rotor yoke 221 fixed to the rotary shaft 203, eight permanent magnets 222 arranged on the outer periphery thereof at equal intervals in the circumferential direction, and the stator containing field iron cores 212 and the field coil 211 wound through the insulating member in slots around in each field iron core. The field coils are classified into field coils of U phase, V phase and W phase, i.e., U phase coils (211U1 - 211U3), V phase coils (211V1 - 211V3), and W phase coils (211W1 - 211 W3), according to the phase of the voltage applied from the driver 242 of the motor.

The brushless DC motor 200 is controlled in a completely closed loop based on the outputs of the ECU 810 and the generic type rotary encoder 100. The rotation information of the DC motor 200 is calibrated in the encoder control unit 130, input to a SSC-BUS converter 172 as a serial bus signal, further passed through a SPI-BUS converter 174 and changed into a serial signal (digital) and a parallel signal (digital), and sent to the controller 240 of the motor. As external interfaces of the EEPROM 164 chip, there are a serial bus type and a parallel bus type. The operation method of the EEPROM varies greatly depending on this interface. There are 1 to 4 bus standard signal lines employed in the serial bus type EEPROM. On the other hand, a parallel EEPROM chip usually has eight (8-bit) data terminals and address terminals corresponding to the storage capacity. The rotary encoder 100 of the present embodiment is constituted so that it can respond to both the serial bus type and the parallel bus type.

The controller 240 generates a drive signal and transmits it to the motor driver 242 such as an inverter. Thus, the brushless DC motor 200 is controlled based on a command from the host controller ECU 810.

The motor controller 240 is realized by, for example, a single-chip microcomputer in which a CPU, a memory, an oscillation circuit, a timer, a I/O interface, a serial I/F, etc. are integrated in one LSI. Each function of the BLCD controller 240 of the brushless DC motor is realized by executing a program held in the memory on the CPU. Memory such as ROM and RAM are connected to the CPU via a bus. The ROM stores a program that is executed at power-on or reset, and constants that do not change during program execution. Flash memory may be adopted as the ROM. The RAM holds program variables, external command values, multi-rotation/absolute signal data, etc. The RAM also stores the target speed (inverter sine wave drive signal, PWM control duty ratio) of the brushless DC motor.

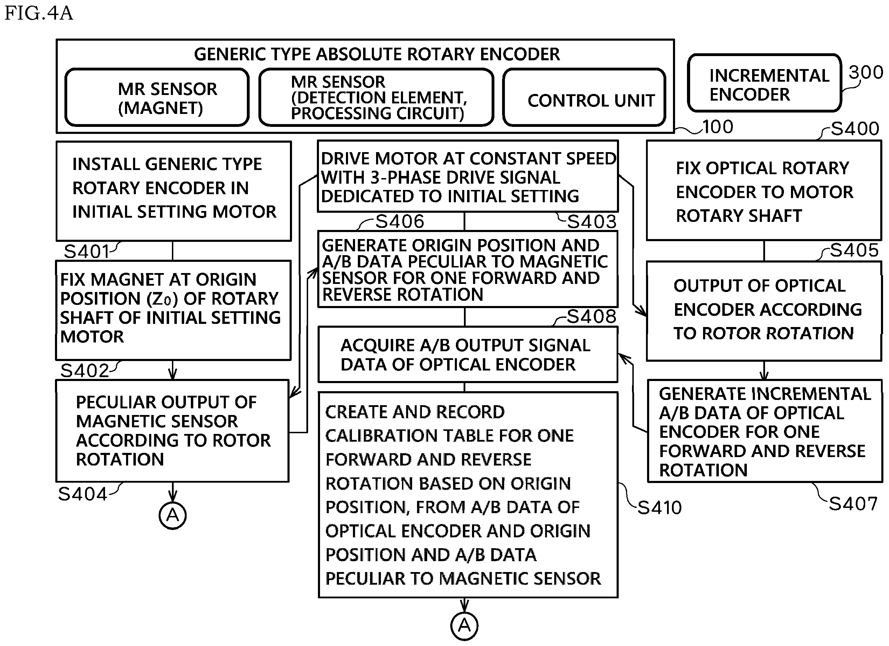

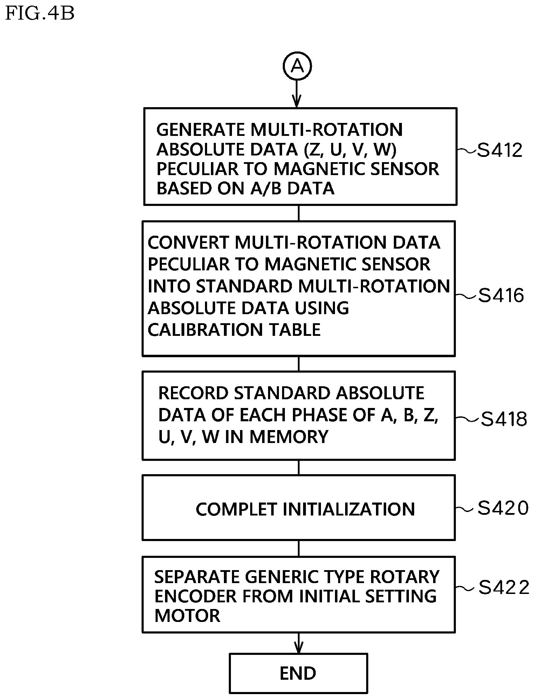

Next, an overview of the initial setting process in the first embodiment will be described with reference to FIG. 1 showing the mutual positional relationship of related devices and a time chart of FIG. 4A and FIG. 4B.

The initial setting is started by the initial setting controller 800 by starting programs related to the initial setting of the generic type rotary encoder 100, the initial setting brushless DC motor 200, and the initial setting optical rotary encoder 300 and further setting necessary parameters. In addition, At the time of initial setting, the environmental temperatures of the generic type rotary encoder 100, the brushless DC motor 200, and the optical rotary encoder 300 are always maintained at room temperature (for example, 20°C). If necessary, calibration data in which environmental temperatures of the brushless DC motor 200 and the optical rotary encoder 300 are changed may be generated.

In addition, in this example, the magnet origin position Z₀ of the initial setting brushless DC motor 200 is clear, and the optical rotary encoder 300 is directly connected to the rotary shaft of the brushless DC motor 200 (S400). Next, the generic type rotary encoder 100 is installed in the brushless DC motor 200, and both motor's circuits are electrically connected (S401). Then, the magnet 113 is fixed to the rotary shaft 203 of the brushless DC motor 200 (S402). Next, the brushless DC motor 200 is driven at a constant speed with a predetermined three-phase drive signal dedicated to the initial setting generated by the encoder control unit 130 (S403). That is, while supplying driving power to the three-phase stator coil of the brushless DC motor 200 and acquiring data for initial setting, the brushless DC motor 200 is controlled to maintain forward rotation and reverse rotation at a constant low rotation speed, for example, 10 rpm. Accordingly, the brushless DC motor 200 rotor and the magnet 113 of the MR sensor rotate, and the MR sensor generates an output signal for at least one forward and reverse rotation (mechanical angle) peculiar to the generic type rotary encoder (S404). Usually, signals for one rotation each in the forward and reverse directions are required. However, if it is particularly necessary depending on the application, the number of rotations in the forward/reverse direction may be set to multiple rotations, for example, 2-3 rotations.

Moreover, the optical rotary encoder 300 directly connected to the brushless DC motor 200 also generates an output signal for at least one forward and reverse rotation based on the same operating conditions (S405). Next, in both the generic type rotary encoder and the optical rotary encoder, incremental data of A/B phase signals for one rotation are generated for one forward and reverse rotation, by assigning the EEPROM address to the incremental cumulative addition value of the A/B output signals based on the absolute origin position Z₀ for at least one forward and reverse rotation (S406, S407). In order to increase the measurement accuracy, an output signal for at least one forward and reverse rotation may be acquired a plurality of times, and an average value thereof may be obtained.

The encoder control unit 130 of the generic type rotary encoder acquires data of A/B output signals of the optical rotary encoder (S408). Then, based on both A/B phase signals data of the generic type rotary encoder and the optical rotary encoder, create a table for calibrating the A/B phase signals data based on the absolute origin position Z₀ of the generic type rotary encoder with the output signal data of the A/B phase signals of the optical rotary encoder, and record the table in the memory (S410). In addition, both the generic type rotary encoder and the optical rotary encoder may acquire data for one forward and reverse rotations a plurality of times, calculate an average value at each rotational position, for improving the accuracy of the calibration table.

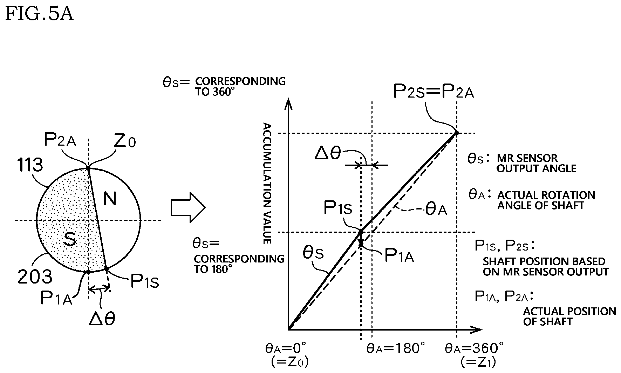

FIG. 5A is a diagram showing an example of characteristics acquired with the generic type rotary encoder. There are various factors that cause variations and distortions in the output characteristics of the generic sensor. Here, a case is assumed in which the magnet 113 of the MR sensor is fixed to be biased with respect to the rotary shaft 203 of the motor. In this example, the boundary between the S pole and the N pole of the magnet is shifted from the original position P_{1A} by an angle Δθ to become a position P_{1S}. Due to this installation error, a phase angle deviation occurs between the output angle θS of the MR sensor indicated by the solid line and the actual rotation angle θA of the axis indicated by the broken line, as shown in the graph of the right-hand side in FIG. 5A.

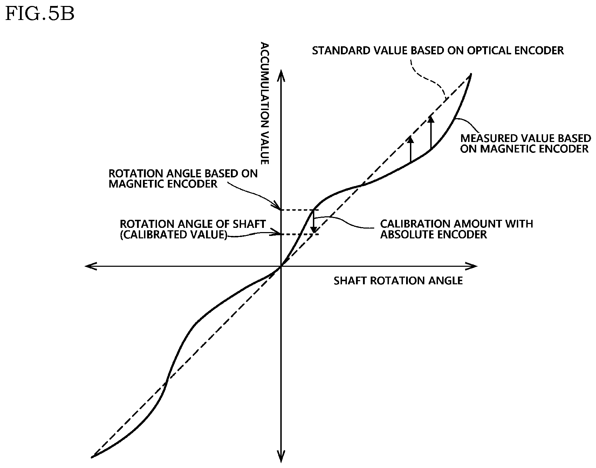

FIG. 5B is a diagram showing an example of calibrating the characteristics of a rotary encoder with the data of an optical rotary encoder. As compared with a generic sensor, as an optical rotary encoder in the present invention, an encoder whose accuracy is guaranteed to be two or three digits higher than that of the generic sensor is adopted. Based on the output data of the optical rotary encoder, the data of each position of the A/B phase digital signals of the generic type rotary encoder in one forward and reverse rotation of the rotary shaft is calibrated. As a method of calibrating, the calibration amount is determined for all pulses for one rotation based on the absolute origin position Z₀, and the calibration data is tabulated.

For example, here, it is assumed that: regarding the rotation angle data at a certain point of the rotary shaft of the same motor, the number of pulses is QR1 with the optical rotary encoder corresponding to the rotation angle of 45.00 degrees, while the number of pulses is QG1 with the generic type rotary encoder (corresponding to the rotation angle of 46. 56 degree). In this case, the output angle at the position of the QG1 pulse of the generic type rotary encoder is calibrated to 45.00 degrees indicated by the optical rotary encoder.

According to inventors' experiments, the deviation of the phase angle of the output of the MR sensor is often repeated in the same pattern every mechanical angle of 360 degrees. Therefore, even in the case of a multi-rotation device, if highly accurate angle data for one rotation (mechanical angle 360 degrees) can be obtained, practically highly reliable control is possible.

Moreover, the output characteristics of the MR sensor change according to the environmental temperature. However, according to inventors' experiment, the relationship between the output characteristics of the magneto resistive element sensor and the optical rotary encoder obtained at room temperature, for example, indicated by the broken line and the solid line in FIG. 5B, is maintained even if the environmental temperature changes. Therefore, by correcting the output characteristics of the MR sensor based on the output of the temperature sensor 123 of the generic type rotary encoder 100 and the calibration data, a highly accurate angle data calibrated from the generic type rotary encoder is obtained even if the environmental temperature changes.

Next, in the encoder control unit 130, the number of U-phase, V-phase, and W-phase pulses corresponding to the drive signal are acquired from the memory. Further, acquires Z-phase width signal and multi-rotation position (S) data, assigns EEPROM address, and multi-rotation absolute data (Z, U, V, W) of the motor to be controlled, to which the generic type rotary encoder is mounted, is generated (S412).

Next, the multi-rotation absolute data (Z, U, V, W) based on the generic type rotary encoder standard is converted into multi-rotation absolute data (Z, U, V, W) based on optical rotary encoder standard (S416).

FIG. 6A is a diagram showing an example of a table of the generic type rotary encoder (hereinafter simply magnetic encoder) 140, a table of the optical rotary encoder 142, and a table for calibration 144. The calibration table 144 for calibrating the data of the magnetic encoder is created such as to match the data of the optical rotary encoder. In this example, the calibration table 144 is a detection angle value table in which each detection angle values of the magnetic encoder are replaced with the data of the optical rotary encoder.

In the example of FIG. 6B, the calibration table 144 is a table that gives a calibration value and a correction value based on the data of the optical rotary encoder for each detection angle value of the magnetic encoder.

In addition, in the table 144 for calibrating of FIG. 6A and FIG. 6B, instead of the detected angle, the incremental value based on the information Z₀ and Zn representing the number of rotations may be replaced with the angle data of the optical rotary encoder. Namely, instead of the angle value, the value of each detected angle of the magnetic encoder may be calibrated and interpolated, using the relationship between the cumulative addition value of the generic type rotary encoder and the cumulative addition value of the optical rotary encoder, which is repeated in units of Z₀, Z1, Z2, -, Zn.

The absolute data of each phase of A, B, Z, U, V, and W obtained as described above is recorded in the encoder memory 160 (S418).

Through the above processing, the initial setting of one magnetic encoder is completed (S420). Then, this magnetic encoder 100 is separated from the initial setting brushless DC motor (S422).

Then, the initial setting brushless DC motor is equipped with a new magnetic encoder, and in the same manner as described above, the initial setting processing of the new magnetic encoder is performed.

The optical rotary encoder and the brushless DC motor constituting the initial setting device are used for a short time at a low speed for the initial setting process of one magnetic encoder. Therefore, the brushless DC motor and the optical rotary encoder constituting the initial setting device can be used repeatedly, for example, 10,000 times to 100,000 times. That is, although the initial setting device in the present invention uses a high-precision, high-priced optical rotary encoder, since many magnetic encoders can be calibrated using this apparatus, the manufacturing cost per magnetic encoder can be reduced.

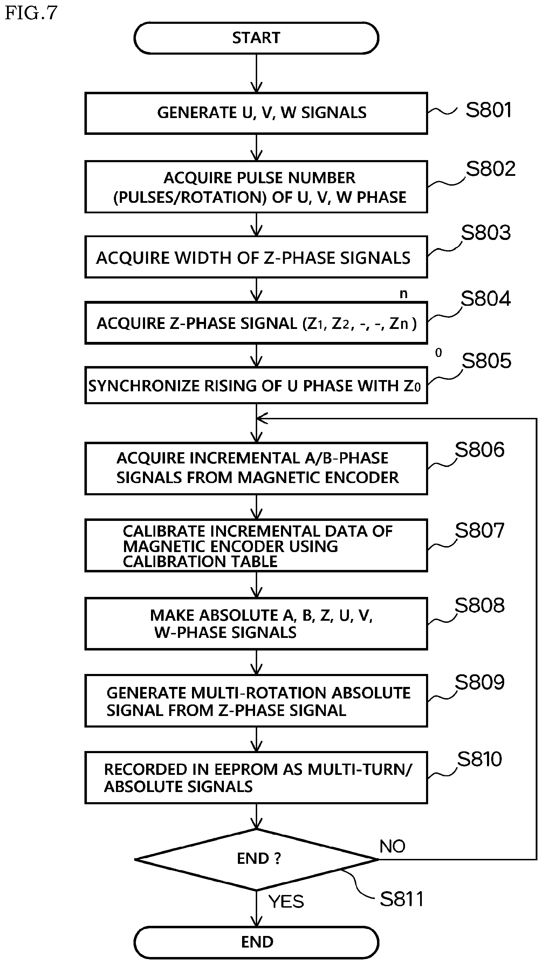

Next, with reference to FIG. 7 to FIG.10, a description will be given of processing during normal operation for a brushless DC motor to be controlled by a generic type rotary encoder that the initial setting has been made based on the first embodiment. A generic type rotary encoder configured as shown in FIG. 2B and FIG. 2C is fixed to a motor to be controlled. In addition, here, the motor to be controlled is a brushless DC motor, and its drive circuit is equivalent to the drive circuit of the brushless DC motor for the initial setting device shown in FIG. 3B. When other types of motors are targeted, it goes without saying that the same processing is performed in a drive circuit necessary for the type of motor.

The BLCD controller 240 of the brushless DC motor to be controlled includes functions of an initial setting data acquisition unit that acquires initial setting data, a normal operation mode DC servo control unit, a normal operation mode motor control signal (iu, iv, iw) generation unit, and an inverter drive signal generation unit. The inverter drive signal generator receives the outputs of the normal operation mode motor control signal generator and the DC servo controller, then, generates an inverter drive signal for controlling the rotation of the brushless DC motor, and drives and controls the inverter of the motor driver.

In the normal operation mode, the BLCD controller 240 causes the brushless DC motor to function as a servo motor based on an external command from the ECU or the like and information in the memory 160 that has been calibrated for the magnetic encoder 100.

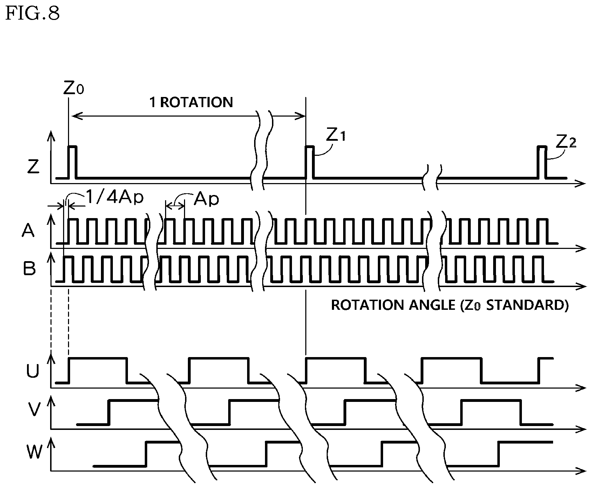

That is, the BLCD controller 240 generates the driving signal of U phase, V phase, and W phase (S801), and drives the brushless DC motor. The BLCD controller acquires the number of U-phase, V-phase, and W-phase pulses/rotation corresponding to the drive signal/rotation from the memory 160 that has been calibrated by the initial setting of the magnetic encoder (S802), and obtain a signal of the Z-phase width (S803). Thereby, the data of the Z-phase signals (Z1, Z2, -, -, Zn) shown in FIG. 8, that is, multi-rotation data is acquired (S804). Moreover, as shown in FIG. 8, the rising edge of the U phase is synchronized with the absolute origin position (Z₀) (S805). And the calibrated A/B phase signals from the magnetic encoder is acquired via the RAM (S806), and the EEPROM address is assigned based on the incremental accumulated value and recorded in the RAM.

The BLCD controller 240 calibrates the incremental data of the magnetic encoder using the calibration table 144 (S807).

Using this calibrated data, the A/B phase signals, the Z-phase signal, the U, V, and W-phase signals for each rotation are made absolute and recorded in the RAM (S808).

Furthermore, a multi-rotation absolute signal including information on the rotation speed and rotation angle of the brushless DC motor is generated from the Z-phase signal and the A/B phase signals (S809), and these signals are recorded in the EEPROM as multi rotations/absolute signal through the RAM (S810).

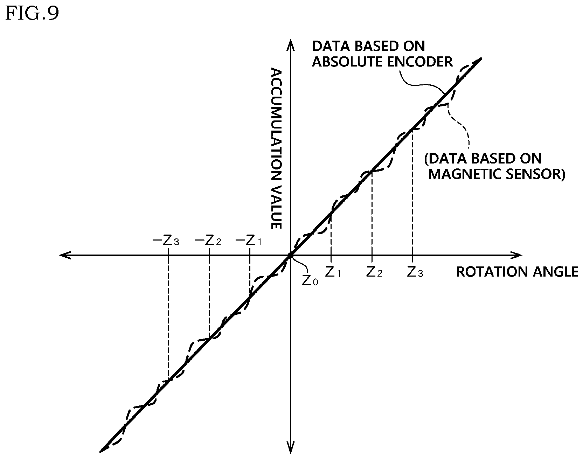

Namely, as shown in FIG. 9, the output obtained from the magnetic encoder of the generic type rotary encoder is converted into highly accurate multi-turn/absolute data using the calibration table 144. This multi-rotation/absolute data is data repeated in units of Z₀, Z1, Z2, -, Zn in the forward and reverse directions.

According to the embodiment, depending on the forward and reverse rotation of the rotary shaft of the brushless DC motor, the information on the rotation angle of the rotary shaft of the motor is calibrated based on the sequential calibration table 144, and based on the calibrated angle, data, A, B, Z, U, V, W signals are incremented and decremented and are sequentially recorded and updated in the EEPROM via the RAM as information representing the current position of the rotary shaft of the brushless DC motor with high accuracy. Based on the updated information, the brushless DC motor is continuously servo-controlled (S806-S810). This process is repeated to finish the operation (S811).

As described above, the brushless DC motor employing the magnetic encoder of the present embodiment operates as a servo motor having a function of a high precision rotary encoder during normal operation.

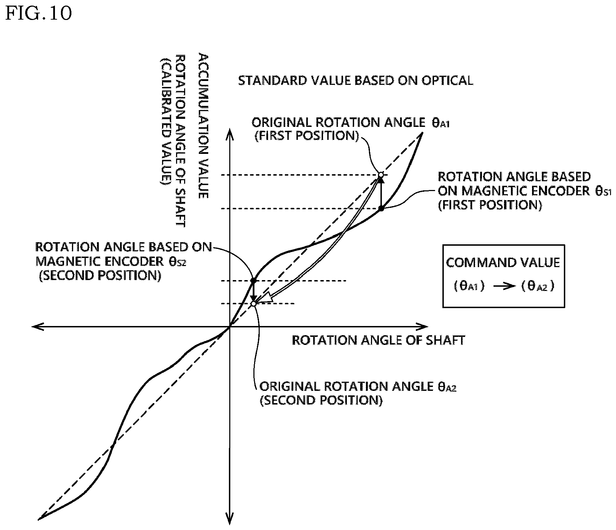

FIG. 10 is a diagram showing effect of calibrating processing at the time in normal operation mode using a generic type rotary encoder.

During normal operation, the direction and speed of rotation of the brushless DC motor change according to the command value. In the case of a generic type rotary encoder that has not been calibrated, in other words, that has no absolute accuracy, the absolute accuracy of the rotary shaft other than the absolute origin position (Z₀) and the position other than the origin position corresponding to the Z-phase signal (Z₀, Z1, Z2, -, Zn) (hereinafter, the position other than the origin) is not high. Therefore, the absolute accuracy of the movement from the first position other than the origin to the second position other than the origin is not high.

For example, in FIG. 10, it is assumed that the magnetic encoder is in the first position (the original rotation angle is θ_{A1}, and the rotary shaft rotation angle is θ_{S1} in a generic type rotary encoder that does not strictly have absolute accuracy). When a command is issued to rotate from this state to the second position (original rotation angle is θ_{A2}), in the case the generic type rotary encoder that does not have strict absolute accuracy is used, the rotary shaft rotates from rotation angle θ_{S1} to θ_{S2}. According to the brushless DC motor employing the magnetic encoder of the present embodiment, positioning with high absolute accuracy is performed from θ_{A1} to θ_{A2} without accumulating such errors. As described above, when the generic type rotary encoder 100 according to the present embodiment is applied as a product to motors or rotating bodies of various devices after the initial setting process, the generic sensor is used as a high precision sensor comparable to a standard sensor.

### Embodiment 2

Next, a second embodiment of the present invention will be described.

In the first embodiment, the multi-rotation absolute data generated by the normal operation data acquisition unit 136 of the generic sensor of the generic type rotary encoder 100 and held in the memory (EEPROM) is data relating to the drive signal of the motor to be controlled by the generic type rotary encoder 100.

As the second embodiment of the present invention, the normal operation data acquisition unit in the first embodiment may be excluded from the generic type rotary encoder 100. Instead, based on the A/B phase signals and Z0 signal in which calibrated data is held in the memory (EEPROM), the generic type rotary encoder may acquire necessary data and generate a control signal for the motor at the time of initial setting of the motor to be controlled.

In this case, the generic type rotary encoder 100 may be equipped with at least a memory (EEPROM) recording a table for calibration, which is used for detecting the angle of the rotary shaft detected by the generic sensor in the mounted motor and calibrating with high accuracy, and outputting as multi-rotation absolute data.

### Embodiment 3

Next, a third embodiment of the present invention will be described.

In the first embodiment, although the case where the absolute origin position (Z₀) of the rotary shaft is known beforehand, in some cases, the absolute origin position (Z₀) of the rotary shaft of the brushless DC motor dedicated to the initial setting is unknown. Alternatively, the absolute origin position (Z₀) of the rotary shaft of the brushless DC motor to which the generic type rotary encoder is attached may be unknown.

The third embodiment is an example in which a step of obtaining the absolute origin position (Z₀) of the rotary shaft of the brushless DC motor is added to the first embodiment. In the following explanation, the details of how to obtain the absolute origin position (Z₀) will be described in detail with reference to the description in Patent Document 1.

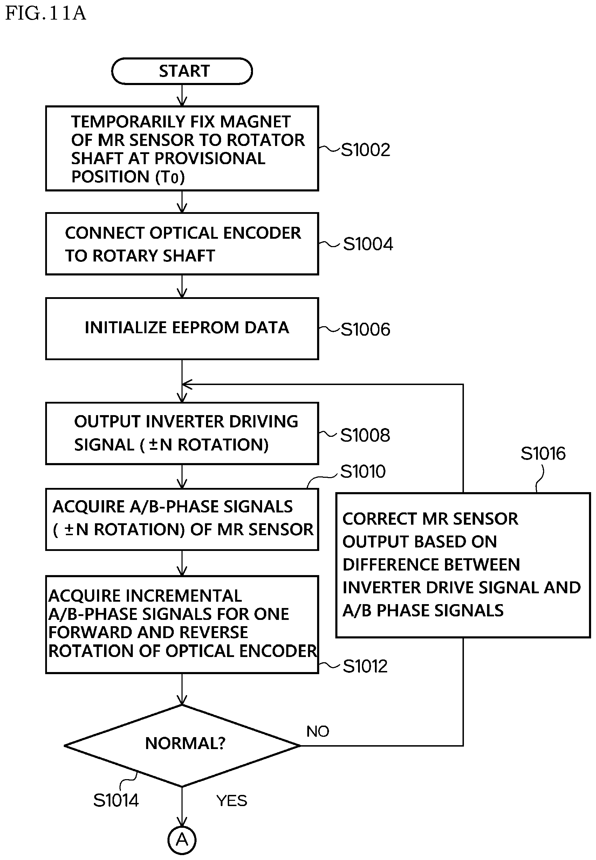

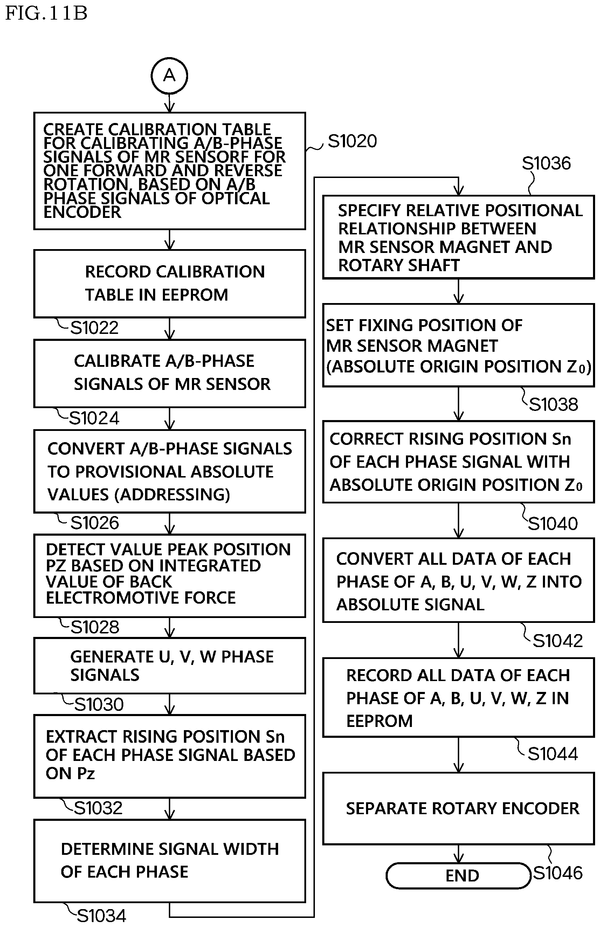

FIG. 11A and FIG. 11B are a flow chart showing an initialization processing of the generic type rotary encoder according to the third embodiment of the present invention.

In the initial setting processing, first, the magnet 113 of the MR sensor is temporarily fixed to the rotary shaft 203 of the brushless DC motor 200 dedicated for initial setting at the temporary position (T0) (S1002), and the optical encoder is also directly connected to the rotary shaft 203 (S1004). Next, the EEPROM data is initialized (S1006), and an initial setting drive signal for initial setting, for example, a signal for driving the brushless DC motor by one to several rotations in the forward and reverse directions with zero rotation there between is outputted to the BLCD controller 240 (S1008), acquires the A/B phase signals of the MR sensor from the rotary encoder 100 (S1010), and further acquires the incremental A/B phase signals from the optical encoder (S1012). Next, it is determined whether the response state of the brushless DC motor or MR sensor is normal (S1014). If it is determined that there is an abnormality, an output correction process is separately performed (S1016).

Next, based on the A/B phase signals of the MR sensor and the A/B phase signals of the optical encoder, a calibration table for calibrating the data of the A/B phase signals of the MR sensor is created (S1020), and the calibration table is stored in the EEPROM (S1022). Then, the A/B phase signals acquired from the MR sensor are calibrated using the calibration table (S1024), and thereafter, absolute recording is performed for recording in the EEPROM (S1026). Thus, temporary absolute signal data is recorded in the EEPROM via the RAM.

Next, the BLCD controller 240 detects the back electromotive force of each phase accompanying the supply of drive power to the stator coil, detects the integrated value peak P_{z} of the back electromotive force (S1028), and U, V, and W phase signals supplied to each field coil 11U, 11V, 11W are generated (S1030), and a positioning information (Sn) is obtained.

FIG. 11A and FIG. 11B are a diagram showing the relationship among the back electromotive forces V_{bu}, V_{bv}, V_{bw} of the field coils 11U to 11W, their integrated value peaks, and positioning information (Sn). The integral value peak corresponds to a point in time when the peak of each integral value exceeds a predetermined threshold value, and this is extracted as positioning information (Sn) (S1032). Next, the signal width of each phase coil is set (S1034).

After the Z-phase signal is obtained, the absolute origin position (Z₀) of the rotary shaft with respect to the drive signal is specified (S1036), and the magnet is fixed to the absolute origin position (Z₀) on the rotary shaft 203 (S1038). Next, the rising position (Sn) of each phase signal is corrected with the absolute origin position (Z₀) (S1040).

Next, the address of the EEPROM is given to the data of the phase information of each signal of the A phase, B phase, U phase, V phase, and W phase, and converted into a multi-rotation/absolute signal (S1042). This Z₀ standard multi-turn absolute data is recorded in the EEPROM 333 (S1044). Then, the generic type rotary encoder is separated from the brushless DC motor (S1046).

In this way, the initial setting of the generic type rotary encoder when the absolute origin position (Z₀) of the rotary shaft of the brushless DC motor is unknown is completed.

The generic type rotary encoder 100 of the present embodiment is used as a high precision sensor comparable to a standard sensor when applied to motors or rotating bodies of various devices as products after undergoing initial setting processing.

### Embodiment 4

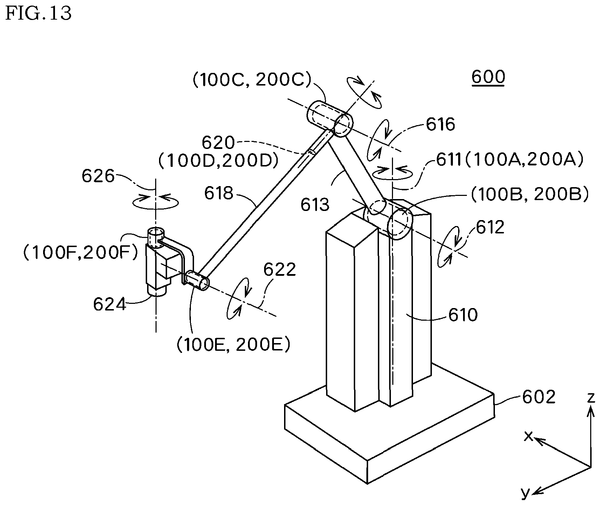

Next, a fourth embodiment in which the generic type rotary encoder of the present invention is applied to a six-axis articulated robot will be described with reference to FIG. 13.

The articulated robot 600 includes a base portion 610 and a plurality of arm portions (613, 618, etc.) constituting a link. A control unit that controls the entire articulated robot 600 is provided in the base unit 610. Each joint part is connected so that the link can mutually be rotated. The base portion and the arm portion are driven by actuators that rotate about six axes, that is, rotary axes 611, 612, 616, 620, 622, and 626, respectively. These actuators include a brushless DC motor 200 (200Ato 200F) provided with the generic type rotary encoder 100 (100A to 100F) of the present invention, and a speed reduction mechanism connected to the output shaft of each motor. An operation unit 624 is provided at the tip of the arm portion. As the operation unit 624, a tool, a camera, etc. can be installed. The control unit includes a function corresponding to the drive circuit of the brushless DC motor shown in FIG. 3B and drives each arm unit based on the command value and the output of each rotary encoder.

By using a brushless DC motor employing the rotary encoder of this embodiment as a driving source for each of six axes, a chip mounter used in a six-axis articulated robot, for example, a semiconductor manufacturing apparatus, without accumulating errors. Thus, positioning with high absolute accuracy can be performed.

### Embodiment 5

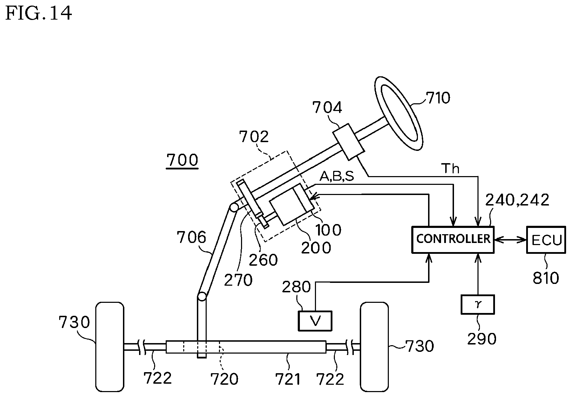

Next, a fifth embodiment in which the rotary encoder of the present invention is applied to an electric power steering apparatus for an automobile will be described with reference to FIG. 14.

The electric power steering apparatus 700 includes a steering mechanism 720 for turning the wheel 730 based on the operation of the steering wheel 710 by a driver, an assist mechanism 702 for assisting the driver in steering operation, a steering shaft 706 serving as a rotary shaft of the steering wheel 710, and a rack shaft 721 connected to the lower end of the steering shaft via a steering mechanism 720. When the steering shaft 706 rotates in accordance with the operation of the steering wheel 710 by a driver, the rotational motion is converted into the reciprocating linear motion of the rack shaft 721 in the axial direction. This reciprocating linear motion is transmitted to the wheels 730 via tie rods 722 connected to both ends of the rack shaft, whereby the turning angle of the wheels 730 is changed and the traveling direction of the vehicle is changed.

The assist mechanism 702 includes a brushless DC motor 200 that applies assist torque to the steering shaft 706, the rotational force of the motor 200 is transmitted to the steering shaft 706 via the reduction gears 260 and 270, thereby assisting the steering operation of the driver.

The steering shaft 706 is provided with a torque sensor 704 that detects a torque (steering torque) Th applied when the driver performs a steering operation. The vehicle is also provided with a vehicle speed sensor 280 and a yaw rate sensor 290 that detects the yaw rate γ. The motor 200 is provided with a rotary encoder 100 that detects the rotation angle of the rotary shaft. The outputs of these sensors are input to a controller 240. The controller 240 generates a driving signal of the motor 200 based on the output of each sensor, transmits the driving signal to the motor driver 242, and controls the brushless DC motor 200, thereby assisting the driver in steering operation by the motor 200.

By using a brushless DC motor employing the rotary encoder of this embodiment as a drive source of the electric power steering apparatus, a steering mechanism with high absolute accuracy can be realized.

### [Explanations of reference numerals]

- 100: generic type rotary encoder
- 110: magnet unit
- 111: magnet holder
- 112: hollow part
- 113: magnet
- 114: fixing means
- 115: box
- 116: bearing
- 118: encoder substrate
- 119: holding part
- 120: sensor output processing unit
- 121,122: pair of MR sensors (magneto resistive element sensor)
- 123: temperature sensor
- 130: encoder control unit
- 160: encoder memory
- 170: communication interface
- 200: initial setting brushless DC motor
- 203: rotary shaft
- 210: motor housing
- 211: field coil
- 212: field core
- 213: insulating member
- 214: end cover
- 221: rotor yoke
- 222: permanent magnet
- 228: signal line
- 240: BLCD controller
- 242: motor driver
- 250: housing cover
- 300: initial setting optical rotary encoder
- 304: casing
- 305: bearing
- 306: rotating substrate
- 311: light emitting element
- 308: diaphragm
- 309: lens
- 314: light receiving element
- 312: 1st slit pattern
- 315: 2nd slit pattern
- 316: controller
- 800: initial setting controller

## Claims

1. A generic type rotary encoder comprising: a generic sensor that is mounted on a motor and detects rotation angle of a rotary shaft of the motor; a rotation angle detector that outputs information on the rotation angle of the rotary shaft of the motor based on an output signal from the generic sensor; and an encoder control unit that generates and outputs a multi-rotation absolute signal for driving the motor based on the information of the rotation angle,
wherein the encoder control unit comprises a function for driving an initial setting motor, an initial setting data acquisition unit for acquiring initial setting data unique to the generic sensor, a normal operation data acquisition unit that acquires and generates data for normal operation used when the motor to be controlled to which the generic type rotary encoder is mounted is normally operated, and an EEPROM recorded calibration data to calibrate the initial setting data unique to the generic sensor,
wherein, the calibration data is obtained, by using a standard sensor that guarantees high accuracy of 2 digits or 3 digits higher than the generic sensor, and by simultaneously connecting the generic sensor and the standard sensor to the initial setting motor and driving the initial setting motor at least one forward and reverse rotation, and
wherein, the calibration data is data for calibration relating to the rotation angle of the rotary shaft.

2. The generic type rotary encoder according to claim 1,
wherein the encoder control unit calibrates the data of each position of the A/B phase digital signals of at least one forward and reverse rotation of the rotary shaft obtained from the generic sensor with the calibration data, based on the incremental values based on the information Z₀ and Zn representing the number of rotations of the rotary shaft, and the calibrated data is recorded in the EEPROM as multi-rotation absolute data for controlling the motor to be controlled.

3. The generic type rotary encoder according to claim 1,
wherein the generic sensor comprises,
a plate-like magnet that is rotatably held in a state of being connected to one end of the rotary shaft, and has an N-pole region and an S-pole region, and
a pair of MR sensors that can be fixed to the housing side of the motor at a position facing the magnet,
wherein the magnet holder for holding the magnet has a hollow portion into which the rotary shaft of the initial setting motor can be inserted.

4. The generic type rotary encoder according to claim 3,
wherein the magnet holder is rotatably held in a cylindrical box through a bearing, and
wherein the magnet holder has a holding unit for fixing the cylindrical box to the housing of the initial setting motor, and an encoder board on which the rotation angle detector and the encoder control unit are mounted.

5. The generic type rotary encoder according to claim 1,
wherein the encoder control unit includes an SSC-BUS converter and an SPIBUS converter and is configured to be compatible with a serial bus type EEPROM and a parallel EEPROM.

6. A servo motor equipped with a generic type rotary encoder and controller,
wherein the generic type rotary encoder comprises, a generic sensor that is mounted on a motor and detects rotation angle of the rotary shaft of the motor; a rotation angle detector that outputs information on the rotation angle of the rotary shaft of the motor based on an output signal from the generic sensor; and an encoder control unit that generates and outputs a multi-rotation absolute signal for driving the motor based on the information of the rotation angle,
wherein the encoder control unit comprises a unit that drives an initial setting motor, an initial setting data acquisition unit for acquiring initial setting data unique to the generic sensor, a normal operation data acquisition unit that acquires and generates data for normal operation used when the motor to be controlled to which the generic type rotary encoder is mounted is normally operated, an EEPROM recorded calibration data to calibrate the initial setting data unique to the generic sensor, and an encoder control unit that generates and outputs a multi-rotation absolute signal for driving the motor based on the information of the rotation angle,
wherein, the controller has functions of an initial setting data acquisition unit, a normal operation mode DC servo control unit, a normal operation mode motor control signal (iu, iv, iw) generation unit, and an inverter drive signal generation unit,
wherein, the calibration data is obtained, by using a standard sensor that guarantees high accuracy of 2 digits or 3 digits higher than the generic sensor, and by simultaneously connecting the generic sensor and the standard sensor to the initial setting motor and driving the initial setting motor at least one forward and reverse rotation,
wherein, the calibration data is data for calibration relating to the rotation angle of the rotary shaft, and
wherein, the controller is configured to cause the motor to function as a servo motor based on an external command or information from the generic type rotary encoder.
